# EUROPEAN PATENT SPECIFICATION

(11) **EP 0 716 495 B1**
(45) Date of publication and mention of the grant of the patent: **02.06.1999**
(21) Application number: 95119067.7
(22) Date of filing: 04.12.1995
(51) Int. Cl.: H02J 7/00

(54) **Battery charger**
Batterieladegerät
Chargeur de batterie

(30) Priority: 07.12.1994 JP 331226/94; 25.08.1995 JP 240713/95
(43) Date of publication of application: 12.06.1996
(73) Proprietor: HONDA GIKEN KOGYO KABUSHIKI KAISHA, Minato-ku Tokyo (JP)
(72) Inventor: Iguchi, Hiroaki, 4-1, Chuo 1-chome, Wako-shi, Saitama (JP); Tamaki, Kenji, 4-1, Chuo 1-chome, Wako-shi, Saitama (JP); Suzuki, Hiroyuki, 4-1, Chuo 1-chome, Wako-shi, Saitama (JP); Nakazawa, Yoshihiro, 4-1, Chuo 1-chome, Wako-shi, Saitama (JP)
(74) Representative: Liska, Horst, Dr.-Ing.

(56) References cited:
- EP-A- 0 608 841
- DE-A- 4 313 776
- DE-A- 4 442 049
- JP-A- 4 131 861
- US-A- 4 605 993
- US-A- 5 144 217
- US-A- 5 159 155

## Description

The present invention relates to a battery charger suitable for charging a battery of a motor-driven vehicle such as a bicycle provided with a motor.

Japanese Utility Model Laid-open No. Hei 4-131861 discloses a battery charger, in which water permeated in an insertion port for a charging terminal is discharged from the bottom of the case of the battery charger. In this structure, more specifically, a cylindrical portion with a bottom, which has an opening portion at the upper end for insertion of a charging terminal, is provided in the case of the battery charger. A drain hole is provided in the bottom portion of the cylindrical portion. A funnel-shape drain cylinder is disposed under the bottom portion of the cylindrical portion, and the outer periphery of the bottom portion of the cyclindrical portion is fitted in the upper end portion of the drain cylinder. The lower end portion of the drain cylinder is then connected to a drain port opened to the bottom portion of the case.

US 5 144 217 and US 4 605 993 show a battery charger whose case consists of two or three case members without drain holes in the bottom thereof.

US 5 159 155 shows a casing for an electrical connection box with an upper and a lower case member. The lower case member has no supporting feet and only one single drain hole in the center of the bottom.

In the battery charger having the first-mentioned known structure, however, since the drain port is positioned at the same level as that of the bottom surface of the case, there is a fear that the drain port is blocked with the ground upon the battery charger is grounded and thereby water remains in the case. Accordingly, an object of the present invention is to provide a battery charger having a structure capable of speedily discharging water in the state that the battery charger is grounded.

In the above-described prior art structure, when the battery charger is fallen, there is a fear that water permeates in the case through the drain port and it remains in the case. Accordingly, another object of the present invention is to provide a battery charger having a structure being difficult to be fallen.

A further object of the present invention is to provide a battery charger having a structure in which water is difficult to permeate in the case of the battery charger through a mating portion of the case or a grommet portion provided in a cord outlet, and further water permeated in the case therethrough is difficult to reach electric components in the case and also speedily discharged.

To achieve the above objects, according to a preferred mode of the present invention, there is provided a battery charger having a case and electric components packed in the case, the case comprising:
an inner case member for containing said electric components, said inner case member having an upper opening portion;
an outer case member for covering at least said opening portion of said inner case member; and
a grounding member for supporting the bottom portion of said inner case member and serving as a grounding portion of said case;
wherein said grounding member has a grounding width larger than the width of the bottom portion of said inner case member and comprises grounding leg portions which are located at corners of the grounding member to separate the grounding member upward from a grounding surface by means of said grounding leg portions;
drain holes are provided in both said inner case member and said grounding member; and
said drain holes provided in said grounding member are positioned higher than the grounding surface of said grounding member, wherein the corners of the grounding member are provided with corner-side drain holes.

Preferably, a positioning recess fittable to the bottom portion of a battery is formed on the upper surface of the outer case for placing the battery on the outer case in such a manner as to be positioned by the positioning recess. Preferably, the battery includes a single battery and combined battery containing a plurality of unit cells.

Since the drain holes of the grounding member are positioned higher than the grounding surface not to be blocked with the ground, water permeating in the case can be speedily discharged. Moreover, since the grounding width of the grounding member is larger than the bottom surface of the inner case, the battery charger is difficult to be fallen and it can be stably grounded.

If the positioning recess fittable to the bottom portion of a battery case is formed in the upper surface of the outer case of the battery charger, each unit cell in the battery case can be discharged in the state that the battery case is placed on the outer case. As a result, the charging of the unit cell can be effected in a relatively small space, and further the battery case can be stably supported during charging.

### Brief Description of the Drawings

Fig. 1 is a side view of a bicycle provided with an auxiliary motive-power device used in the present invention.

Fig. 2 is a side view showing essential portions of the front frame portion of the bicycle shown in Fig. 1.

Fig. 3 is a sectional view taken along the line 3-3 of Fig. 2.

Fig. 4 is a sectional view of a battery case of the bicycle provided with an auxiliary motive-power device, with parts partially cut-away.

Fig. 5 is a view showing a front-side mounting structure of the battery case.

Fig. 6 is a view of a pop-up mechanism, as seen from the direction of the arrow Z of Fig. 2.

Fig. 7 is an enlarged view of essential portions of a rear-side mounting structure of the battery case.

Fig. 8 is a view showing the entire configuration of an embodiment of a battery charger of the present invention.

Fig. 9 is a plan view of a main body of the battery charger shown in Fig. 8.

Fig. 10 is a bottom view of the battery charger shown in Fig. 8.

Fig. 11 is an enlarged view of a grommet mounting portion of the battery charger shown in Fig. 8.

Fig. 12 is a sectional view taken along the line 12-12 of Fig. 9.

Fig. 13 is a side view showing the outline of another embodiment of the battery discharger of the present invention.

Fig. 14 is a plan view of the battery discharger shown Fig. 13.

Fig. 15 is a sectional view taken along the line 15-15 of Fig. 13.

Fig. 16 is a sectional view taken along the line 16-16 of Fig. 14.

Fig. 17 is a sectional view taken along the line 17-17 of Fig. 14.

Fig. 18 is a bottom view of the battery discharger shown in Fig. 13.

Fig. 19 is a block diagram of a circuit contained in the battery charger shown in Fig. 13.

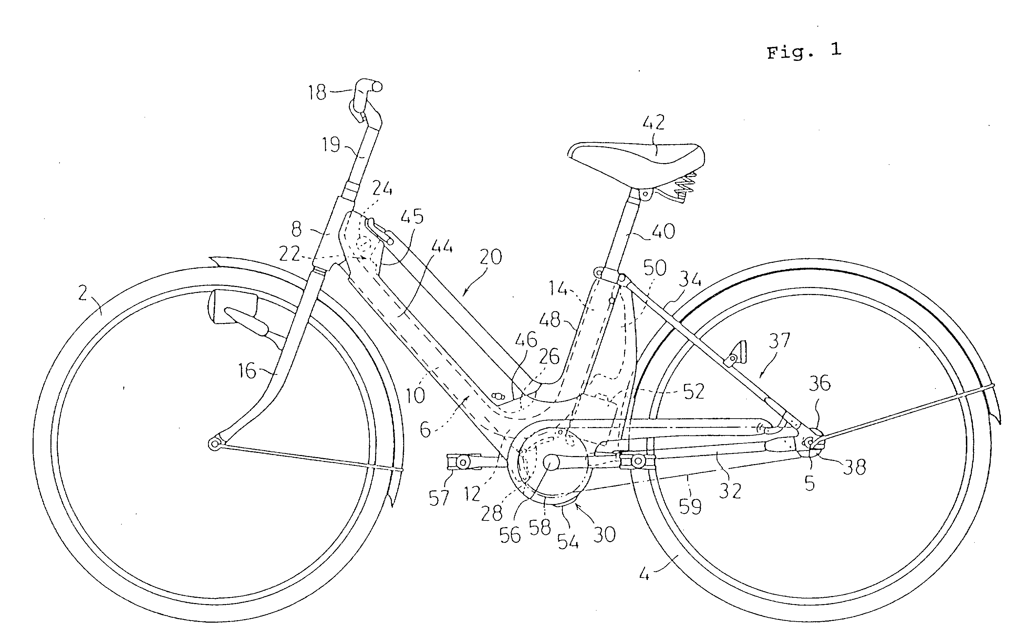

Figs. 1 to 7 show a bicycle provided with an auxiliary motive-power device including a battery case chargeable by a battery charger of the present invention. Fig. 1 is a side view of the entire configuration of the bicycle. The bicycle includes a front frame 6 which is formed in a V-shape as seen from the side and disposed between a front wheel 2 and a rear wheel 4. The front frame 6 has a main frame 10 extending obliquely, downward, and backward from a head pipe 8; an intermediate portion 12 curved downward; and a seat frame 14 extending approximately in the vertical direction.

The head pipe 8 turnably supports a front fork 16 for supporting at its lower end the front wheel 2, and a steering post 19 mounting at the upper end a handle 18. On the main frame 10, a battery case 20 for containing a battery (described later) is removably mounted between a front-side fixing portion 22 and a motor-side connector 26 functioning as a male connector. The battery case 20 has a length being approximately the same as that of the main frame 10. In addition, reference numeral 24 designates a lock device.

The intermediate portion 12 supports an auxiliary motive-power generating device 30 through a hanger plate 28. A rear fork 32, with the front end mounted to the auxiliary motive-power generating device 30, extends approximately in the horizontal direction. The rear end of the rear fork 32 is connected to a bracket 36, together with the rear ends of a pair of right and left rear stays 34 extending obliquely and downward from the upper end of the seat frame 14, to form a rear frame 37. The bracket 36 rotatably supports a rear axle 5 of the rear wheel 4 and a driven sprocket 38.

A saddle seat 42 is supported on the upper end portion of the seat frame 14 through a seat post 40. The surroundings of the front frame 6 and the auxiliary motive-power generating device 30 are covered with a body cover 44. The body cover 44 is divided into right and left parts. The front portion of the body cover 44 covers the front-side fixing portion 22, and is continuous to an inclined wall 45.

An inclined wall 46 is formed, on the center portion of the body cover 44 which covers the lock device, in such a manner as to be inclined obliquely, backward, and upward. A front portion of the seat frame 14 has an opening portion which is blocked by a front panel 48.

The auxiliary motive-power generating device 30 includes a control unit 50, a motor 52 and a transmission 54. A crank shaft 56, an output shaft of the transmission 54 is rotated integrally with a drive sprocket 58 for rotating the driven sprocket 38 of the rear wheel 4 through a chain 59.

Pedals 57 are mounted on the crank shaft 56, which are stepped on to be manually driven. At this time, the motor 52 is rotated by an electric-power supplied from a battery in the battery case 20, to generate an auxiliary motive-power. The control unit 50 controls rotation of the motor 52 on the basis of a torque transmitted from the pedals 57 and the rotational frequency of the drive sprocket 58.

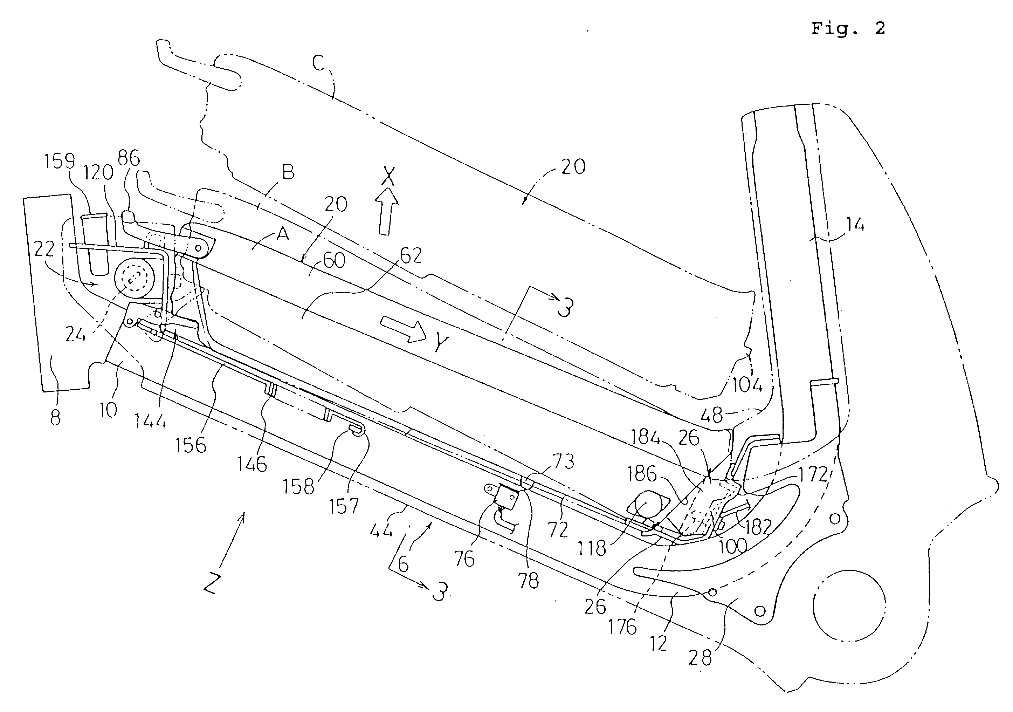

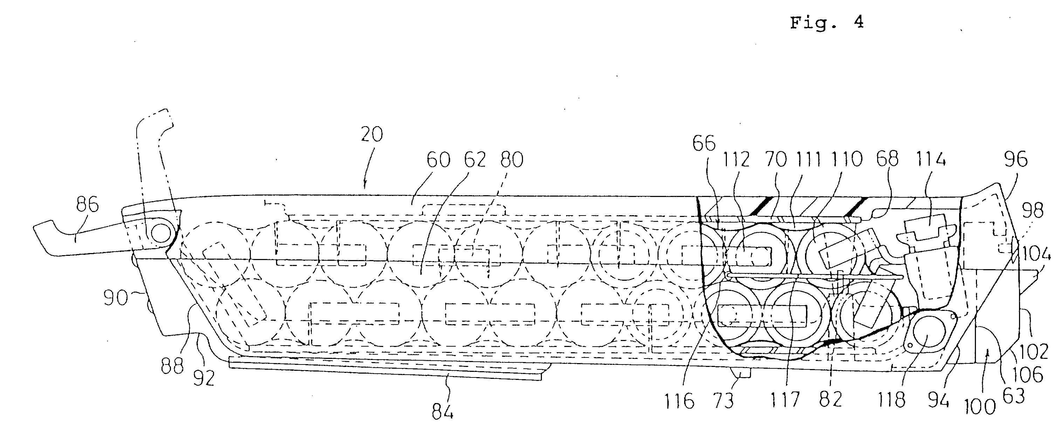

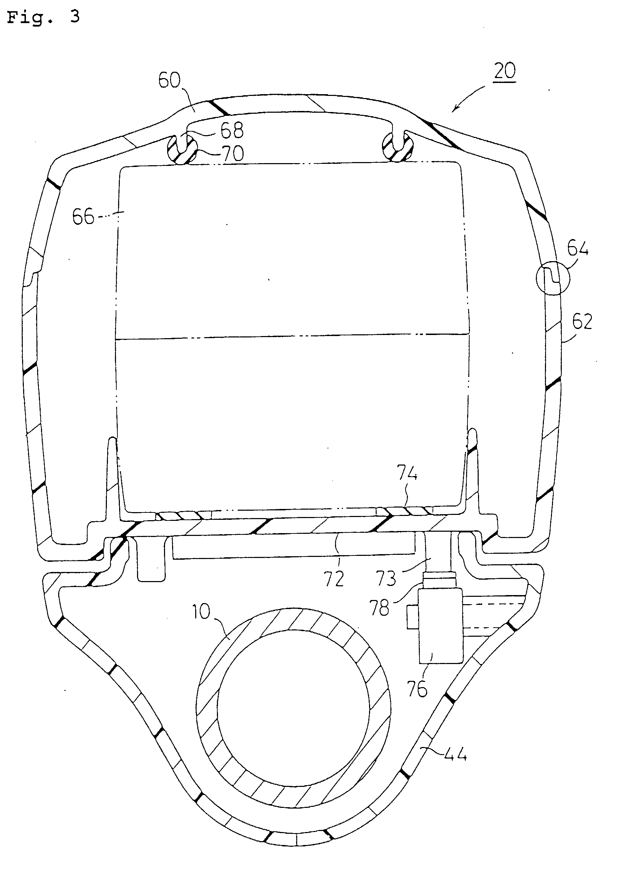

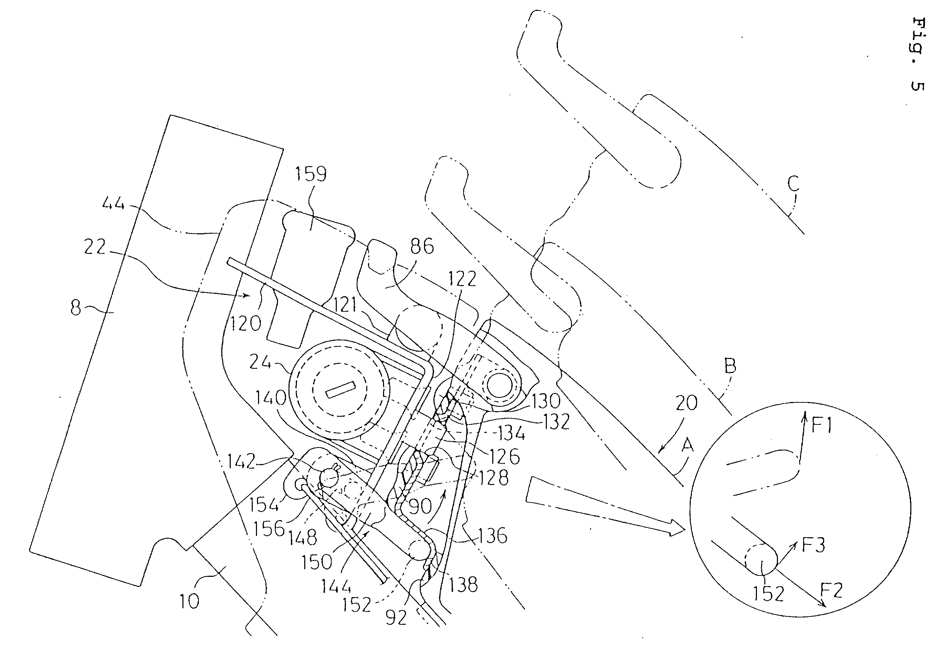

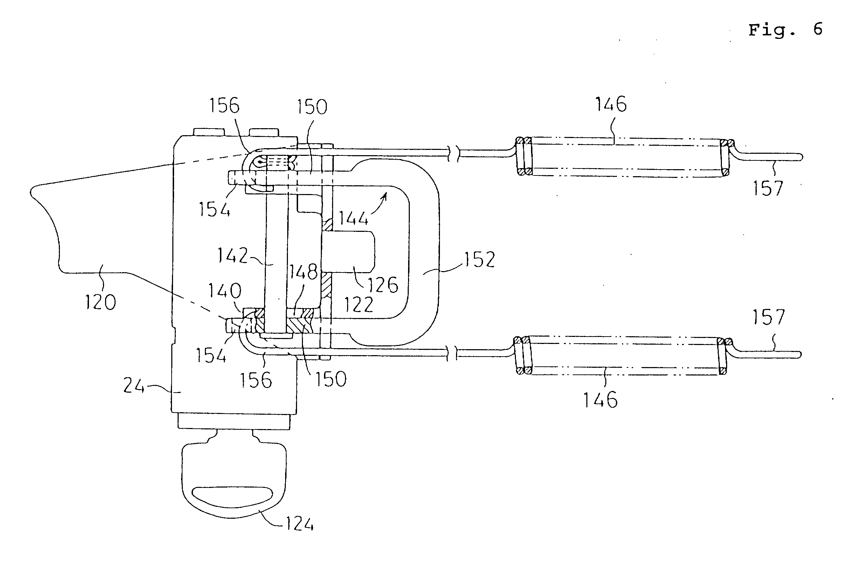

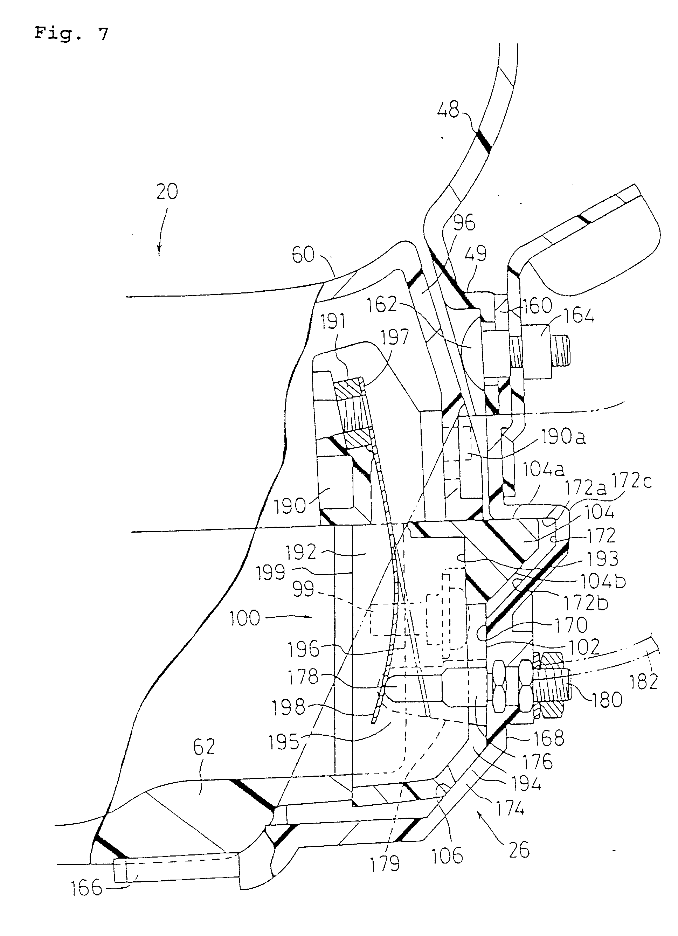

Fig. 2 is a side view of the front frame 6 portion in the state that the body cover 44 is removed; Fig. 3 is a sectional view taken along the line 3-3 of Fig. 2; Fig. 4 is a side view of the battery case 20, with parts partially cut-away; Fig. 5 is a view showing a structure of mounting the front side of the battery case 20; Fig. 6 is a view showing essential portions of the structure shown in Fig. 5, as seen from the bottom (in the direction of the arrow Z of Fig. 1); and Fig. 7 is a view showing a structure of mounting the rear side of the battery case 20.

As shown in Fig. 2, the front-side fixing portion 22 is provided on the front end portion of the main frame 10, and the motor-side connector 26 is provided in the vicinity of the intermediate portion 12. The battery case 20 can be shifted between a mounting position shown by the solid line A, and a pop-up position shown by the virtual line B. At the mounting position, the front end portion of the battery case 20 is locked by the lock device 24 in the state that the rear end portion thereof is fitted to the motor-side connector 26. On the other hand, at the pop-up position, the front end portion of the battery case 20 is lifted after being released in locking.

At a position shown by the virtual line C, the battery case 20 is removed in the direction approximately perpendicular to the longitudinal direction of the main frame 10 (in the direction shown by the arrow X). The position shown by the virtual line C also shows the state before the battery case 20 is mounted. In addition, when being shifted between the mounting position A and the pop-up position B, the battery case 20 can be slid approximately along the longitudinal direction of the main frame 10 (in the direction shown by the arrow Y).

As shown in Fig. 3, the battery case 20 is a plastic member vertically divided into an upper case 60 and a lower case 62. Mating faces 64, 64 of both the cases 60 and 62 are each stepped, and are overlapped at the stepped portions, to form a labyrinth structure for preventing permeation of water.

A battery pack 66 is contained in the battery case 20. The upper portion of the battery pack 66 abuts rubber made grooved members 70 mounted on ribs 68 projecting downward from the inner surface of the upper case 60. On the other hand, the lower portion of the battery pack 66 abuts rubber made flat cushions 74 interposed between the bottom of the battery pack 66 and the bottom 72 of the lower case 62. The battery pack 66 is thus supported in the battery case 20 in such a manner as to be isolated from vibration.

In Fig. 3, reference numeral 76 designates a limit switch which is mounted on the inner surface of the body cover 44. When the battery case 20 is mounted on the body cover 44, a projection 73 projecting downward from the bottom 72 of the lower case 62 pushes down a downward extending plate spring 78. At this time, by the lowering of the plate spring 78, the limit switch 76 is turned on. On the other hand, the limit switch 76 is turned off when the battery case 20 is located at the pop-up position (described later).

As shown in Fig. 4, the upper and lower cases 60, 62 of the battery case 20 are engaged with each other by means of an engagement claw 80 projecting upward from the lower case 62 on the first half of the side surface of the battery case 20, and are fastened to each other by a tapping screw 82 on the second half of the side surface of the battery case 20. In this way, the upper and lower cases 60, 62 are separably integrated with each other. A rubber cushion member 84 is interposed between the first half of the bottom of the lower case 62 and the main frame 10 side.

A handle 86 is turnably mounted on the front end portion of the battery case 20. An inclined stepped portion 88 is stepped from a front surface 90 of the battery case 20 into a shape corresponding to that of the inclined wall 45 provided at the front end portion of the body cover 44 for covering the front side fixing portion 22 (see Fig. 1). A pressing stepped portion 92 is formed in the lower portion of the front surface 90 in such a manner as to cut into the front surface 90.

A rear inclined surface 94 is formed on the rear end portion of the battery case 20 in such a manner as to be inclined obliquely, backward, and upward. The rear inclined surface 94 has a shape corresponding to that of the inclined wall 46 provided on the front end portion of the body cover 44 (see Fig. 1). A rear surface 96 of the upper case 60 is inclined in a shape having an inverse slope to that of the rear inclined surface 94.

A battery-side connector 100 functioning as a female connector is mounted on the rear end portion of the battery case 20 by means of a vis 98 or the like. A rear surface 102 of the battery-side connector 100 forms a butt surface against the motor-side connector (described later). A positioning engagement projection 104, which is formed approximately into a triangular shape as seen from the side, projects from the center of the butt surface of the battery-side connector 100. The rear end of the bottom of the battery-side connector 100 forms a guide inclined surface 106 inclined backward and upward.

The battery pack 66 is composed of a combination battery which packs the surroundings of a plurality of unit cells 110 with a heat-contractive tube 111. In addition, the unit cells 110 are arranged in such a manner that two sets of unit cells each connected in series are stacked in the vertical direction. The unit cell 110 is of a charging type, for example, a Ni-Cd type.

The adjacent unit cells 110 are connected in series through each conducting plate 112, and are connected to a discharge terminal (described later) of the battery-side connector 100 through a fuse 114. In Fig. 4, reference numeral 116 designates a temperature detecting thermistor; 117 is a lead wire of the thermistor; and 118 is a charge terminal.

The charge terminal 118 contains a reverse-current preventing diode, and is mounted on the rear surface of the lower case 62. Since being provided separately from the discharge terminal, the charge terminal 118 enables the battery to be charged even when the battery case 20 is mounted or when it is removed.

Fig. 5 shows a detailed structure of the front-side fixing portion 22 for fixing the battery case 20. The front-side fixing portion 22 includes the lock device 24 and a pop-up mechanism. The lock device 24 is mounted on a vertically extending upright wall 122 of a front bracket 120 approximately L-shaped in section. The front bracket 120 is provided between the head pipe 8 and the front end portion of the main frame 10.

The lock device 24 has a combination switch function of turning on/off a power source using a key 124 (see Fig. 6) and of locking/unlocking the battery case 20 by inserting a lock pin 126 in a lock hole 128 formed in the front surface 90.

The key-position of the lock device 24 is as follows. At the on-position, the lock pin 126 is in the locking state, and the key 124 cannot be removed and a current is carried from the battery pack 66 to the motor 52. On the other hand, at the off-position, a current-carrying is stopped and the key 124 can be removed, but the lock pin 126 is left in the locking state. When the off-position is shifted to the lock position by pushing and turning the key 124, the lock pin 126 is released so that the battery case 20 can be removed.

In addition, a lock plate 132 is mounted inside the front surface 90 by means of a vis 130 for reinforcing the front surface 90. An opening portion 134 corresponding to the lock hole 128 is formed in the lock plate 132. The lower end portion of the lock plate 132 extends up to the pressing stepped portion 92 and forms an exposed curved portion which constitutes longitudinal butt surface 136 to be butted upon unlocking and a butt surface 138 to be butted upon locking (see Fig. 5).

As shown in Fig. 6, the pop-up mechanism includes a pair of stays 140 provided on the upright wall 122 under the lock device 124; a rocking arm 144 supported by the stays 140 through a slide shaft 142; and tension springs 146 biasing the rocking arm 144 to turn it counterclockwise.

The stays 140 projects forward while being spaced at an interval in the vehicular body width direction. A slot 148 extending longer in the longitudinal direction is formed in each of the stays 140 for allowing the slide shaft 142 to be movable in the longitudinal direction. On the other hand, the rocking arm 144 is approximately U-shaped, and a pair of right and left flat portions 150 of the rocking arm 144 are each overlapped on the outer surfaces of the stays 140.

The slide shaft 142 extends to cross the right and left flat portions 150 through the slots 148 of the right and left stays 140, and is connected to the rocking arm 144 in such a manner that the rocking arm 144 is movable in the longitudinal direction relative to the stays 140 and is rockable around the slide shaft 142.

A portion of the rocking arm 144, which extends in the vehicular body width direction and connects the right and left flat portions 150 to each other, forms a butting portion 152. The butting portion 152 is to be butted to the butt surface 136 (to be butted upon unlocking) or the butt surface 138 (to be butted upon locking) of the lock plate 132.

The tension springs 146 are coil springs longitudinally extending along the right and left side surfaces of the main frame 10. With respect to the tension springs 146, front-side mounting portions 156 thereof are each locked with mounting projections 154 projecting from the front ends of the flat portions 150, and rear-side mounting portions 157 thereof are each locked with projections 158 projecting from the side surfaces of the main frame 10.

The tension springs 146 usually bias the rocking arm 144 backward, and also bias the butting portion 152 to turn it counterclockwise. Accordingly, at the pop-up position shown by the virtual line B, the rocking arm 144 is drawn backward and the slide shaft 142 is moved to the rear ends of the slots 148, so that the butting portion 152 pushes up the butt surface 136 (to be butted upon unlocking). As a result, the tensile strength of the tension springs 146 almost acts as a pushing-up force F1.

In the state of mounting the battery case 20 shown by the solid line A, the butt surface 136 (to be butted upon unlocking) pushes down the butting portion 152 clockwise, and the rocking arm 144 is positioned to be approximately parallel to the length direction of the main frame 10. As a result, the butting portion 152 is pushed forward against the rocking arm 144 by the butt surface 138 (to be butted upon locking), and the slide shaft 142 is moved to the front ends of the slots 148.

Thus, by the reaction of the tension springs 146, the butting portion 152 pushes the butt surface 136 (to be butted upon unlocking) and the butting surface 138 (to be butted upon locking). In this case, a force F2 applied by the butting portion 152 for pressing the butt surface 138 (to be butted upon locking) backward is very larger than a force F3 applied by the butting portion 152 for pushing up the butt surface 136 (to be butted upon unlocking). The pushing-up force F3 is sufficient to pop-up the front portion of the battery case 20 when the lock device 24 is released.

At the pop-up position, the slide shaft 142 is moved to the rear ends of the slots 148, and the butting portion 152 is turned counterclockwise to push up the butt surface 136 (to be butted upon unlocking).

In Figs. 2 and 5, reference numerals 121 and 159 designate indicators provided on the upper portion of the front bracket 120 for indicating the on-positions of the mounting stays 140 and the lock device 24 respectively.

As shown in Fig. 2, the motor-side connector 26 to be fitted to the battery-side connector 100 provided on the rear portion of the battery case 20 is provided near the intermediate portion of the main frame 10. As shown in Fig. 7, an upper mounting portion 160 of the motor-side connector 26 is overlapped on a front center portion 49 of the lower end portion of the opening/closing portion 48 and mounted thereto by means of a vis 162 and a nut 164.

In addition, the front center portion 49 has the same inclination as that of the rear surface 96, and upon mounting of the battery case 20, the front center portion 49 is matched to the rear surface 96 at the same inclination but with a slight gap. A lower mounting portion 166 of the motor-side connector 26 is mounted on the body cover 44 by means of a vis or the like (not shown).

On the inner surface side of a rear surface 168 of the motor-side connector 26, an abutment surface 170 is formed for positioning the longitudinal direction of the battery. Specifically, when the battery-side connector 100 is mounted, the rear surface 102 of the battery-side connector 100 abuts the abutment surface 170. A projection 172c projects backward from the position corresponding to the positioning engagement projection 104 of the battery-side connector 100. The projection 172c has on its inner side an engagement recess 172 for receiving the positioning engagement projection 104. A guide surface 174 having an inclination being approximately the same as that of the guide inclined surface 106 of the battery-side connector 100 is formed at the position corresponding the guide inclined surface 106.

The engagement recess 172 is formed to be larger than the engagement projection 104. When the battery case 20 is mounted, a top portion 104a of the engagement projection 104 abuts a top portion 172a of the engagement recess 172, so that the battery case 20 is positioned in the vertical direction.

Lower-side inclined surfaces 172b and 104b of the engagement recess 172 and the engagement projections 104 are nearly equal to each other in inclination, and upon engagement, they are matched to each other nearly at the same inclination but with a slight gap.

A pair of pin-like motor terminals 176 are provided on both sides of the abutment surface 170. Leading ends 178 of the motor terminals 176 project in the battery case 20. On the other hand, rear ends 180 of the motor terminals 176 exteriorly extend from the rear surface 168, and are connected to cords 182. The cords 182 are connected to the control unit 50.

A pair of side wall portions 184 for receiving the batter-side connector 100 are formed on both sides of the motor-side connector 26. Front edge portions 186 of the side wall portions 184 are matched to the inclined walls 46 of the battery case 46 with a slight gap (see Fig. 2).

As shown in Fig. 7, an upper portion 190 of the battery-side connector 100 enters the upper case 60 and is positioned to the upper case 60 by means of projections 190a. Lower portions 192 of the battery-side connector 100 are mounted to the lower case 62 by means of vises 99 from the outside of the rear wall 63 (see Fig. 4) of the lower case 62. The rear-side center portion of the lower portion 192 forms a projecting portion 193 projecting outward and rearward from the center portion of the rear wall 93 (see Fig. 4). On the projecting portion 193, the rear surface 102 and the engagement projection 104 are formed, and further a pair of right and left terminal-passing holes 194 are formed at the positions corresponding to the motor terminals 176.

The terminal-passing holes 194 are communicated to recesses 195 formed in the lower portion 192 on the lower case 62 side. The motor terminal 176 has a length allowing the leading end 178 thereof to project in the recess 195 through the terminal-passing hole 194 upon mounting of the battery case 20. A plate spring-like discharge terminal 196 is disposed in the recess 195 in such a manner as to extend longer in the vertical direction. The discharge terminal 190 is screwed with a nut 191 previously fixed on the upper portion 190, at an approximately U-shaped portion 197 formed at the upper end portion of the discharge terminal 196, to be thus electrically connected to the battery pack 66.

A pair of the right and left recessed portions 195 are formed to put a bulkhead 199 therebetween so as to correspond to a pair of the right and left motor terminals 176. A vertical groove is formed in the bulkhead 199, and a guide projection 179 projecting for separating the right and left motor terminals 176 from each other is inserted in the groove.

A free lower end 198 of the discharge terminal 196 is positioned to cover the exit, facing to the recess 195, of the terminal-passing hole 194, as shown by the virtual line in Fig. 7. When the leading end 178 of the motor terminal 176 projects in the recess 195 through the terminal-passing hole 194 upon mounting of the battery case 20, the lower free end 198 is pushed forward and elastically deformed by the leading end 178 as shown by the solid line in Fig. 7. As a result, the lower free end 198 of the discharge terminal 196 is brought in contact with the leading end 178 of the motor terminal 176 at a high contact pressure.

At the mounting position (solid line A) and the pop-up position (virtual line B) of the battery case 20 in Fig. 2, a current-carrying state occurs when the leading ends 178 of the motor terminals 176 are contacted with the lower free ends 198 of the discharge terminals 196 through the terminal-passing holes 194. To cope with this inconvenience, the limit switch 76 functions as follows: namely, at the pop-up position, the limit switch 76 is turned off for cutting off a current flowing from the lower free end 198 to the leading end 178, and only at the mounting position, the limit switch 76 is turned on for allowing a current to flow from the lower free end 198 to the leading end 178.

The motor-side connector 26 is connected to or separated from the rear side of the battery case 20 by sliding the battery case 20 in the direction shown by the arrow Y in Fig. 2. In such a state, the motor-terminals 176 are connected to or separated from the discharge terminals 196 of the battery-side connector 100, and at the same time the engagement projection 104 of the battery-side connector 100 is inserted in or separated from the engagement recess 172 of the motor-side connector 26. At this time, the stroke amount of the battery case 20 in the Y direction is determined by the stroke amount of the slide shaft 142.

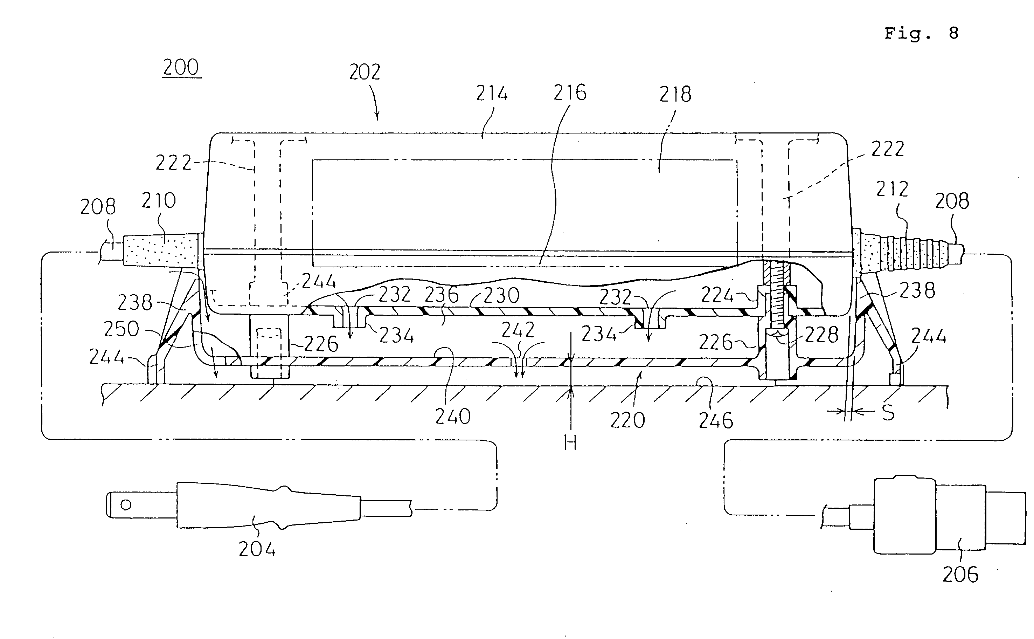

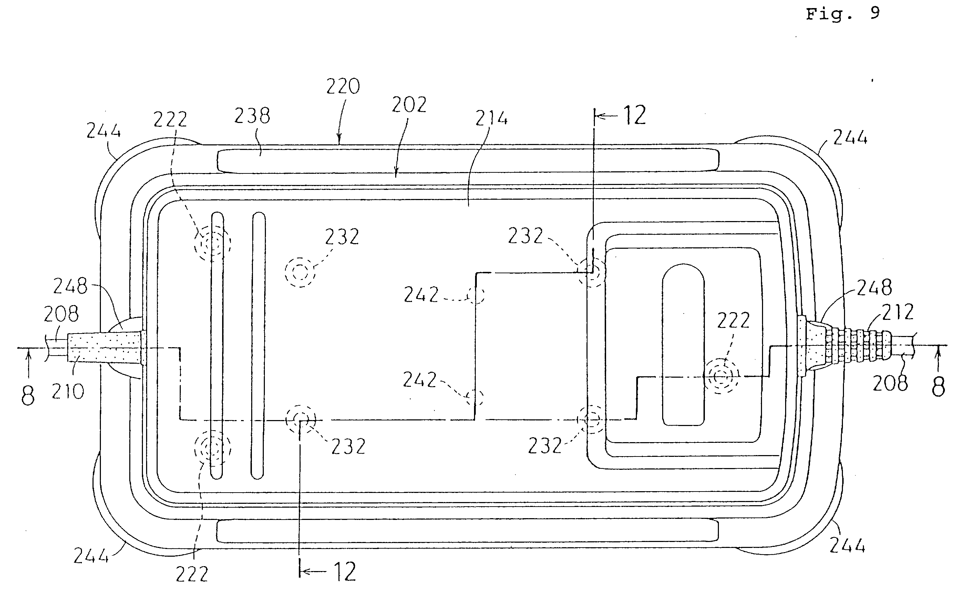

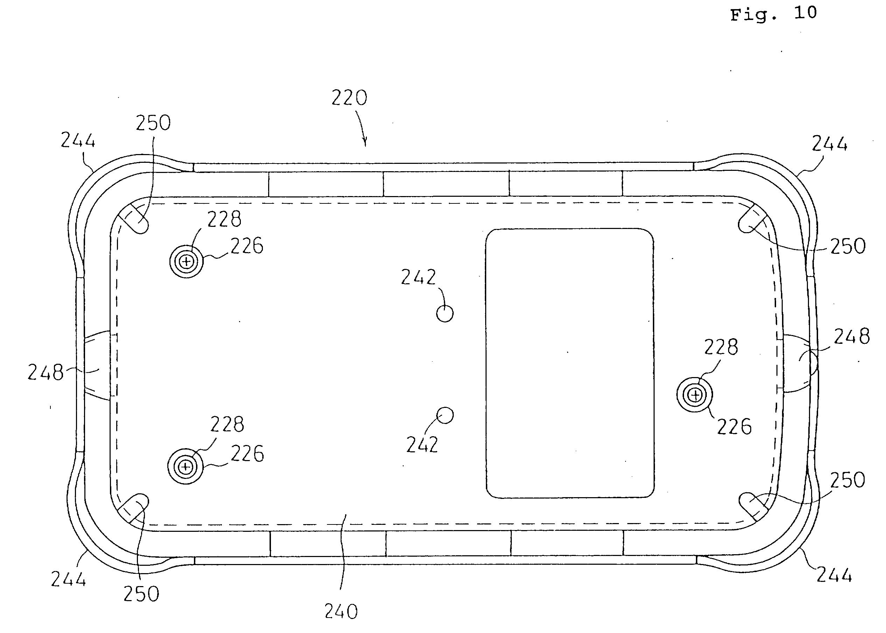

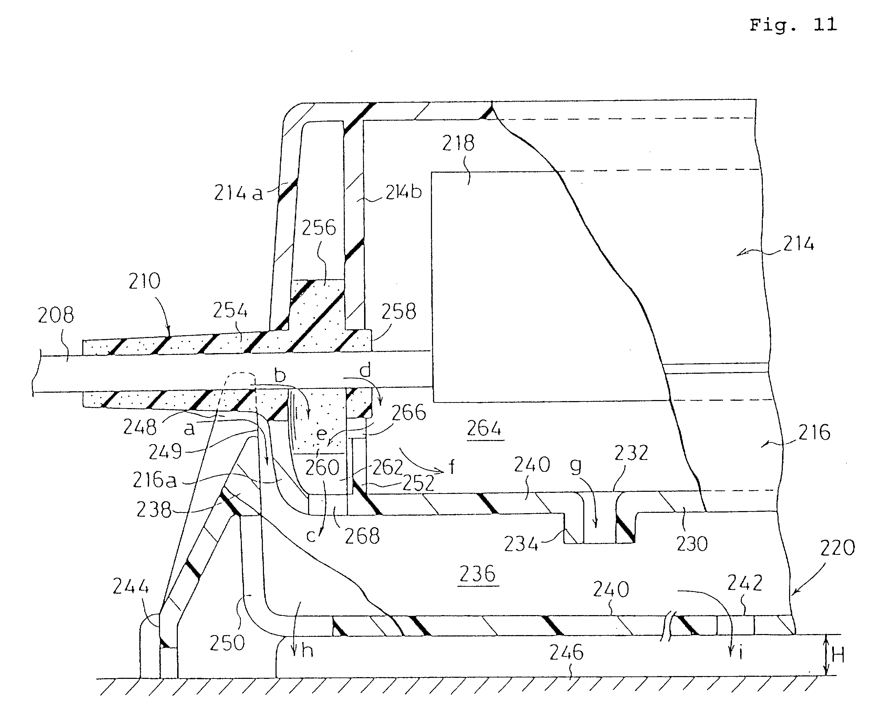

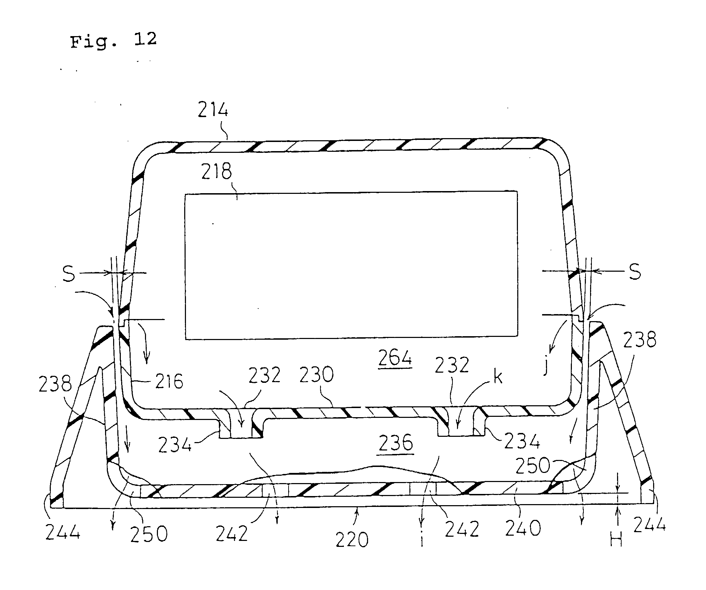

Figs. 8 to 12 are views each showing a separate type battery charger 200 to be connected to a charging terminal 118. Fig. 8 is a view showing the entire configuration of the battery charger 200 (a main body 202 of the battery charger 200 is shown in section taken along the line 8-8 of Fig. 9); Fig. 9 is a plan view of the main body 202; Fig. 10 is a bottom view of the main body 202; Fig. 11 is an enlarged sectional view of a grommet mounting portion; and Fig. 12 is a sectional view taken along the line 12-12 of Fig. 9.

As shown in Fig. 8, the battery charger 200 includes the main body 202, a power supply plug 204 to be connected to a house-service power supply (100 V), a coupler 206 to be connected to the charging terminal 118, a cord 208, and grommets 210, 212.

The main body 202 for containing electric components 218 such as an amplifier is vertically divided into an inner case 216 and an outer case 214. The main body 202 forms a case for the battery charger 200 in cooperation of a grounding member 220 for supporting the lower portion of the inner case 216.

Bosses 222 are integrally formed on the outer case 214, and bosses 224 are integrally formed on the inner case 216. Bosses 226 are also integrally formed in the grounding member 220. The bosses 222, 224 and 226 are coaxially arranged, and are fastened from the bottom side by means of tapping screws 228. The outer case 214 is thus integrated with the inner case 216.

Four pieces of case-side bottom drain holes 232 are formed in a bottom portion 230 of the inner case 216 in such a manner as to be spaced from each other at intervals in the longitudinal and lateral directions. A flange 234 is formed around each bottom drain hole 232.

The grounding member 220 has a peripheral wall 238 formed with a fitting recess 236. The fitting recess 236 has a size being large enough for the inner case 216 to be freely fitted therein. A bottom portion 240 of the fitting recess 236 is slightly larger than the bottom portion 230 of the inner case 216. At the center of the bottom portion 240, a pair of grounding member-side bottom drain holes 242 are formed in such a manner as to be spaced from each other at an interval in the lateral direction.

The peripheral wall 238 is folded outward at the upper portion so as to form a double-wall shape, and the outer wall portion of the peripheral wall 238 spreads downward. The lower ends of four corner portions of the outer wall portion project downward from the bottom portion 240, to form grounding leg portions 244. With the grounding leg portions 244, the bottom portion 240 is, upon grounding, separated upward from the ground 246 by a height H.

When the inner case 216 is fitted in the fitting recess 236, a slit S is formed between the upper edge of the peripheral wall 238 and the inner case 216. Also, recesses 248 for avoiding grommets 210, 212 are formed at the leading edge of the peripheral wall 238.

Grounding member-side drain holes 250 are formed at four corners of the bottom portion 240. Such a hole is formed by slotting the peripheral wall 239 in the range from the bottom portion 240 side to the vicinity of the root of each grounding leg portion 244.

As shown in Fig. 11, inside the outer case 214 and the inner case 216, inner walls 214b, 252 are integrally formed, respectively. The inner walls 214b, 252 are positioned near the grommet 210 in such a manner as to be approximately in parallel to the outer walls 214a, 216a, respectively. These outer walls 214a, 216a and the inner walls 214b, 252 form a grommet mounting portion.

The grommet 210 has an outward extending portion 254, a large diameter portion 256, and an inward extending portion 258. The large diameter portion 256 is held between the outer walls 214a, 216a and the inner walls 214b, 252. The outward extending portion 254 is held between the outer walls 214a, 216a, and the inward extending portion 258 is held between the inner walls 214b, 252. With this arrangement, the outlet for the cord 208 is prevented from permeation of water.

When grommet 210 is fitted, a slight gap 249 is formed between the recess 248 and the outward extending portion 254. The gap 249 is communicated to the slit S formed between the peripheral wall 238 and the inner case 216 (see Fig. 12). A drain portion 260 in the form of a downward open groove or hole is provided on the lower portion of the large diameter portion 256 in such a manner as to be communicated to a drain space 262 surrounded by the inner and outer walls 216a, 252 and the bottom portion 240.

A communicating portion 266 is formed on the upper portion of the inner wall 252 at a position surrounding the inward extending portion 258 for communicating the drain space 262 to an electric component arranging space 264 positioned inside the inner walls 214b, 252.

A grommet drain hole 268 is opened in the bottom 240 under the drain space 262. The position of the grommet drain hole 268 is shifted from that of the drain hole 250 in the lateral and longitudinal directions.

In addition, the drain hole 250 is shown in Fig. 8, 11 and 12, with the sectional position changed for surroundings. The same is true for the grounding member-side bottom drain hole 242 in Fig. 12. In addition, the grommet 212 has the same structure as that of the grommet 210, and therefore, the explanation thereof is omitted.

Next, the function of this embodiment will be described. Referring to Fig. 11, water reaching the grommet 210 through the outer surface of the outer case 214 and the cord 208 is almost dropped in the fitting recess 236 through the slit S formed between the inner case 216 and the peripheral wall 238 and the gap 249, as shown by the arrow "a".

At this time, even when part of water permeates between the grommet 210 and the outward extending portion 254 or between the outward extending portion 254 and the outer walls 214a, 216a, it is dropped in the drain space 262 through the drain portion 260 as shown by the arrow "b", and is further dropped in the fitting recess 236 through the grommet drain hole 268.

If the remaining slight water passes through the large diameter portion 256 as shown by the arrow "d", part of the water is returned in the drain portion 260 through the communicating portion 266 as shown by the arrow "e", and the remaining one flows to the center along the bottom 240 as shown by the arrow "f" and is then dropped in the fitting recess 236 through the case-side bottom drain hole 232 as shown by the arrow "g".

On the other hand, as shown in Fig. 12, water permeating in the electric component arranging space 264 through the mating portion between the outer case 214 and the inner case 216 is dropped in the fitting recess 236 by way of the routes shown by "j" and "K". The water dropped in the fitting recess 236 is then discharged outside the grounding member 220 in the same routes as described with reference to Fig. 11.

Since the slit S is formed between the case and the grounding member 220, water does not remain around the case, and is immediately dropped in the fitting recess 236 of the grounding member 220. As a result, it is difficult for water to permeate through the mating portion between the outer case 214 and the inner case 216 and the sealing portion of the grommet 210 or 212.

In this embodiment, the grommet mounting portion has a double wall structure by additionally providing the inner walls 214b, 252. Moreover, the drain portion 260 is formed in the grommet 210 and the grommet-side drain hole 268 is formed in the bottom 240. Accordingly, even when water permeates in the case along the cord 208, the grommet 210 or the grommet 212, it is immediately discharged in the fitting recess 236 through the discharge space 262. As a result, it is difficult for water to permeate in the electric component arranging space 264 in which the electric components are arranged.

If part of water permeates in the electric component arranging space 264, it can be dropped in the fitting recess 236 through the case-side bottom drain hole 232. In addition, the case-side drain hole 232 is separated from the grounding member 220 at a sufficient interval for enabling water to be speedily discharged.

At this time, since the grounding member 220 is separated upward by means of the grounding legs 244 from the ground 246 by the height H, the grounding-side bottom drain holes 242 and the corner-side drain holes 250 are not blocked by the ground 246, enabling water to be speedily discharged.

Each interval between the grounding leg portions 244 of the grounding member 220 for supporting the case is larger than the width of the bottom portion 240 of the inner case 216. This is effective to prevent the falling of the battery charger 200 during use, and hence to stabilize the operation of the battery case 200.

In this embodiment, the case-side drain holes 232, 268 are respectively shifted in position from the grounding member-side drain holes 242, 250 for forming the labyrinth structure. Accordingly, even when the battery charger 200 is fallen, water permeating in the fitting recess 236 through the grounding member-side bottom drain holes 242 or 250 is difficult to further permeate in the electric component arranging space 264.

The flange 234 is provided so as to surround the case-side bottom drain hole 232 and the grommet-side drain hole 268 is separated from the electric component arranging space 264 by means of the inner walls 214b, 252, so that the permeation of water in the electric component arranging space 264 can be further prevented.

The above-described embodiment is for illustrative purposes only, and it is to be understood that various changes and modification may be made. For example, the objective battery can be suitably used for domestic electric components.

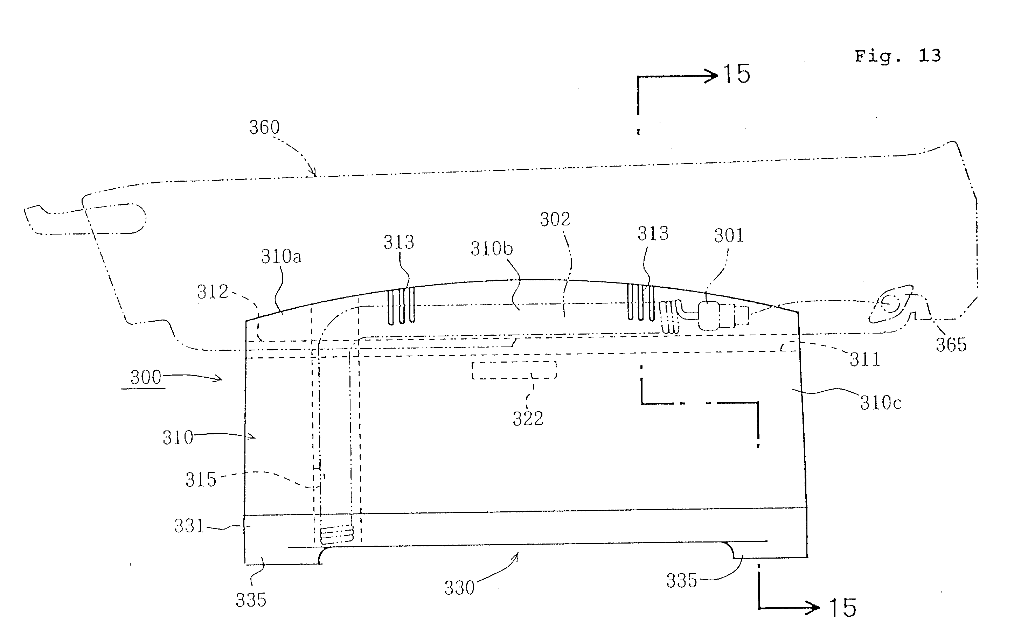

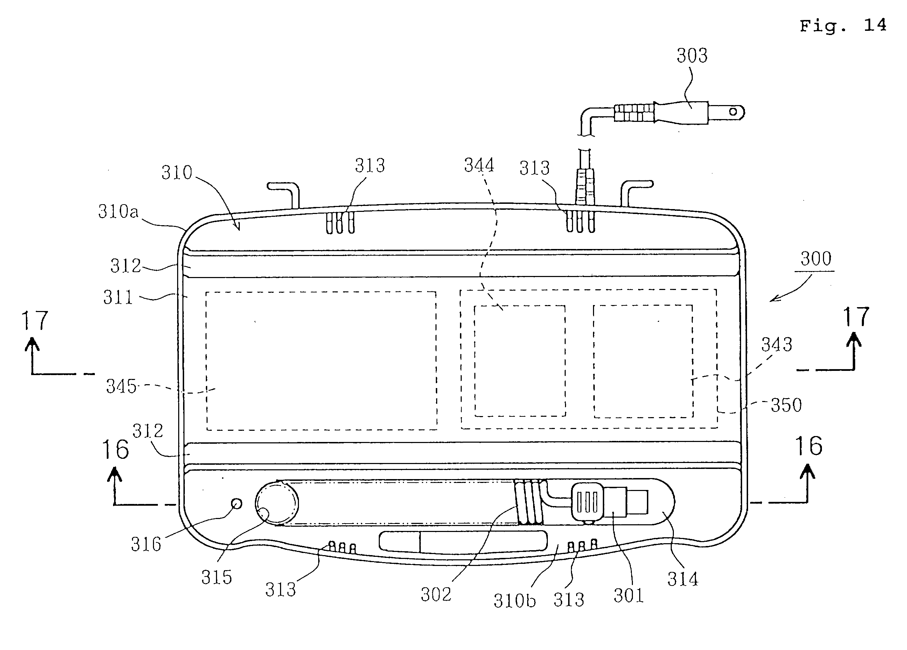

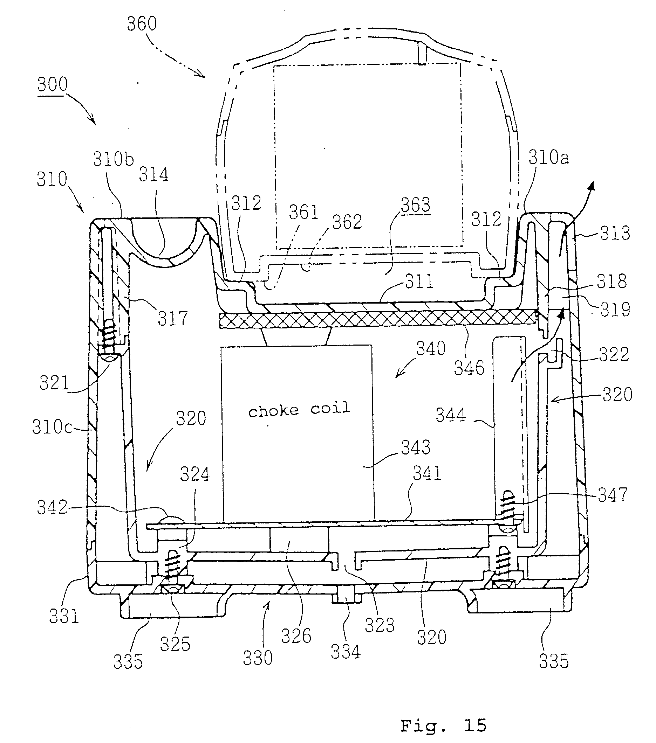

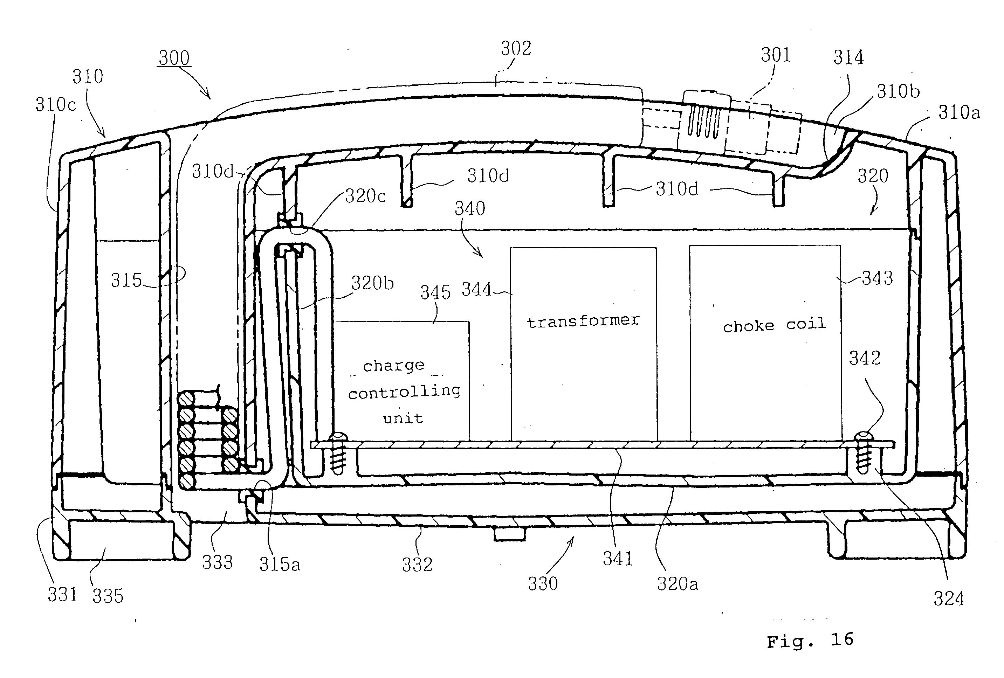

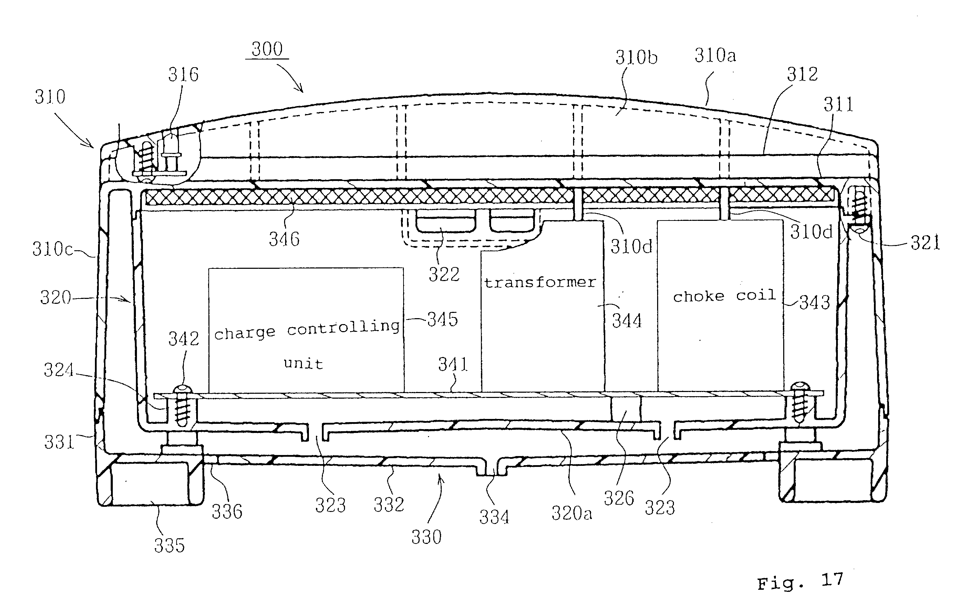

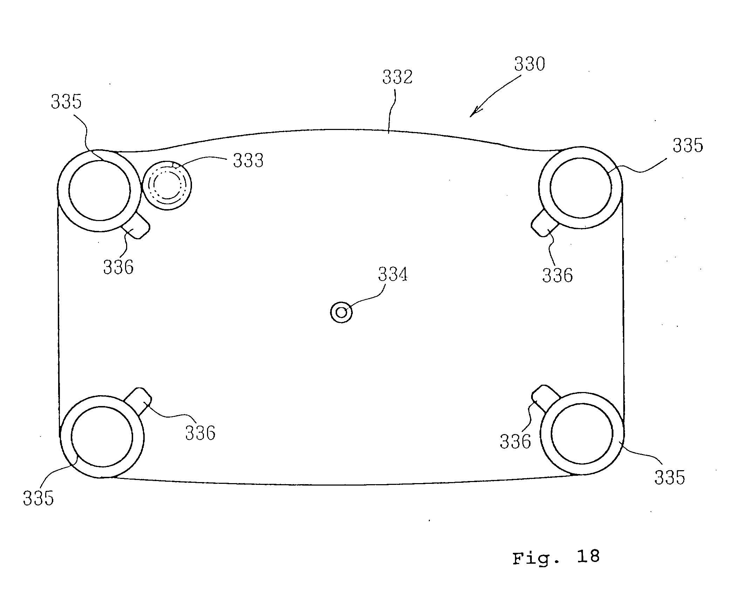

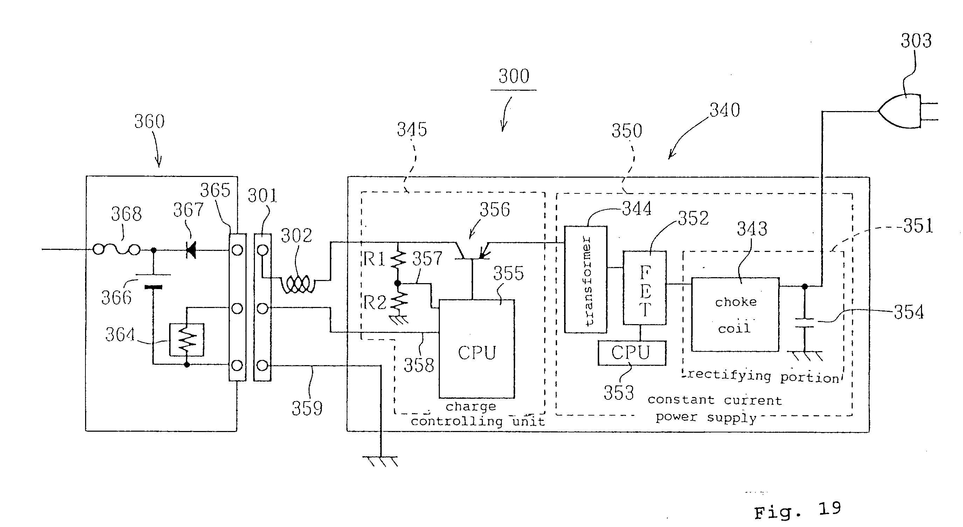

Figs. 13 to 19 shows another embodiment of the battery charger of the present invention. Fig. 13 is a side view showing the entire configuration of the battery charger; Fig. 14 is a plan view of Fig. 13; Fig. 15 is a sectional view taken along the line 15-15 of Fig. 13; Fig. 16 is a sectional view taken along the line 16-16 of Fig. 14; Fig. 17 is a sectional view taken along the line 17-17 of Fig. 14; Fig. 18 is a bottom view of Fig. 13; and Fig. 19 is a block diagram of a circuit contained in the battery charger.

Referring to these figures, the case of the battery charger 300 includes an outer case 310 forming the upper portion and most of the side portion of the charger case, an inner case 320 contained inside the outer case 310, and a grounding member 330 for supporting the bottom of the inner case 320 (see Fig. 15).

A positioning recess 311 extending in the longitudinal direction is formed at the center portion on the upper surface of the outer case 310. Parallel stepped portions 312 for fittably supporting the bottom portion of a battery case 360 are formed on both the sides of the positioning recess 311.

The battery case 360 has a structure similar to that of the above-described battery case 20. As shown in Fig. 15, the bottom portion of the battery case 360 is fitted in the recess 311. At this time, projecting end portions 361 formed on both the sides of the bottom portion of the battery case 360 in such a manner as to put the positioning recess 311 therebetween are placed on the stepped portions 312. The battery case 360 is thus positioned so as to prevented from being shifted in the lateral direction.

In this state, the center portion of the bottom of the battery case 360 forms a center recess 362 recessed upward. A thermal insulating space 363 is formed between the center recess 362 and the positioning recess 311. The space 363 has a gap enough to prevent heat from transmitting from the battery charger 300 side to the battery case 360.

A pair of edge portions 310b extend along the stepped portions 312 in such a manner as to put the positioning recess 311 therebetween and raised from the positioning recess 311. Air discharge ports 313 are each formed in the edge portions 310b.

A cord holder 314 for containing a coupler 301 and the cord 302 is recessed in one of the edge portions 310b in parallel to the stepped portion 312.

On end of the cord holder 314 is continuous to a vertical hole 315 extending in the vertical direction, and the coil-shaped cord 302 extends in the battery charger 300 through this vertical hole 315.

A charging lamp 316 for indicating the charging state by lighting is mounted in the vicinity of the vertical hole 315. Part of the charging lamp 316 exposed to the exterior (see Figs. 14, 17).

A side surface 310c of the outer case 310 extends to the lower portion of the battery charger 300 for covering the battery charger 300. The end portion of the side surface 310c is connected to the upper end portion of a side wall 331 of the grounding member 330.

As shown in Fig. 15, a boss 317 and a rib 318 are integrally formed at each corner between an upper surface 310a and the side surface 310c in such a manner as to extend downward from the upper surface 310a. The boss 317 is connected to the upper end portion of the inner case 320 by means of a screw 321.

The rib 318 is separated from the inside of the side surface 310c at an interval. The interval forms an air discharge space 319 which is connected to the air discharge port 313. The air discharge space 319 is also communicated to the interior of the inner case 320 through an air vent 322 formed in the upper end portion of the inner case 320.

The inner case 320 is a vessel opened upward. A plurality of drain holes 323 are formed in the center of the bottom portion 320a in the lateral direction in such a manner as to be spaced from each other in the longitudinal direction at intervals (see Fig. 17).

A boss 324 is formed at each corner of the bottom portion 320a. The bosses 324 are connected to the grounding member 330 by means of screws 325.

Electric components 340 are contained in the inner case 320, and a circuit board 341 for the electric components 340 is mounted on the bosses 324 by means of screws 342. The center portion of the circuit board 341 is supported by a rib 326 projecting upward from the bottom portion 320a.

A choke coil 343, a transformer 344 and a charge controlling unit 345 (see Figs. 16, 17) constituting part of the electric components 340 are mounted on the circuit board 341 by means of screws 347 (see Fig. 15).

A thermal insulating member 346 is disposed on the back side of the positioning recess 311 over the electric components 340.

As shown in Fig. 16, holes 315a, 320c with grommets are formed at the lower wall of the vertical hole 315 and a connection portion between the upper end of the inner wall 320b of the inner case and the rib 310d near the vertical hole 315. The cord 302 is connected to the charge controlling unit 345 through these holes 315a, 320c.

The vertical hole 315 vertically passes through the entire battery charger 300. The lower end portion of the vertical hole 315 is communicated to an opening portion 333 formed in the bottom portion of the grounding member 330. Water permeating in the inner case 320 can be discharged from the opening portion 333.

At the center portion of the bottom portion 332 of the grounding member, a grounding member-side center drain hole 334 is formed so as to be shifted in position from the drain hole 323 of the bottom portion 320a of the inner case (see Fig. 17).

As shown in Fig. 18, a boss-like grounding leg 335 is formed at each corner of the bottom portion 332. A drain hole 336 is formed at the root of the grounding leg 335 which is separated upward from the ground.

As shown in Fig. 19, the circuit for the electric components 340 includes a constant current power supply 350 and the charge controlling unit 345.

The constant current power supply 350 includes a rectifying portion 351 to be connected to a power supply plug 303, an FET 352, a CPU 353, and the transformer 344. The rectifying portion 351 has a smoothing capacitor 354 and the choke coil 343.

A current rectified by the rectifying portion 351 flows to the transformer 344 through the FET 352 controlled by the CPU 353. A constant current is thus output from the transformer 344.

The charge controlling portion 345 allows a current output from the transformer 344 to flow to the coupler 301 through a p-n-p type transistor 356 controlled to be turned on or off by the CPU 355.

In the transistor 356, the emitter side is connected to the transformer 344; the base side is connected to the CPU 355; and the collector side is connected to the coupler 301 through the cord 302.

The CPU 355 is connected to an intermediate portion between resistances R1, R2 connected between the transistor 356 and the coupler 301 by way of a monitor line 357 for monitoring a partial voltage of each unit cell (described later) contained in the battery case. In addition, the resistance R2 is grounded.

The CPU 355 is also connected to a temperature detecting thermistor 364 provided in the battery case by way of a monitor line 358 for effecting on-off control of the transistor 356 on the basis of a temperature detected by the thermistor 364. Reference numeral 359 indicates the grounding side of the monitor line.

A charging terminal 365 of the battery case 360 is connected to the positive electrode of a unit cell 366 contained in the battery pack through a counter-current preventive diode 356.

The positive electrode of the unit cell 366 is connected to the battery-side connector through a fuse 368, while the negative electrode of the unit cell 366 is grounded through the charging terminal 365, the coupler 301 and the monitor line 359.

Next, the function of this embodiment will be described. The unit cell 366 contained in the battery case 360 is charged in the manner as shown in Figs. 13 and 15. The outer case 360 is longitudinally fitted in the fitting recess 311 formed in the outer case 310 of the battery charger 300. The projecting end portions 361 of the battery case 360 are placed on the stepped portions 312 of the outer case 310. After that, the coupler 301 is pulled from the cord holder 314 and connected to the charging terminal 365. Moreover, the power supply plug 303 is connected to the house-service power supply.

With this arrangement, the battery case 360 is left as being placed on the battery charger 300 during charging. As a result, the charging of the unit cell can be effected in a relatively small space. In addition, since the battery case 360 is fitted in the positioning recess 311, it can be prevented from being shifted in the lateral direction, that is, it can be stably supported.

As shown in Fig. 15, heat generated in the battery charger 300 during charging is exteriorly discharged by way of the air vent 322, air discharge space 319 and air discharge port 313.

In this embodiment, the thermal insulating member 346 is provided on the back side of the upper surface 310a of the positioning recess 311, and the thermal insulting space 363 having a large volume is provided between the positioning recess 311 and the center recess 362 of the battery case 360. Accordingly, it is possible to control a temperature rise in the battery case 360, and hence to increase the charging efficiency.

The provision of the cord holder 314 makes easy the storage of the coupler 301 and the cord 302. Moreover, since the cord holder 314 passes through the vertical hole 315 and the lower end portion of the vertical hole 315 is communicated to the opening portion 333 of the bottom portion 332, water permeating in the battery charger 300 can be speedily discharged.

In addition, water permeating in the outer case 310 and the inner case 320 is speedily discharged through the drain holes 323, 334 and 336.

Summarized the present invention seeks to provide a battery charger capable of enhancing water resistance.

An inner case 216 is mounted on a grounding member 220 which is larger than a bottom portion 230 of the inner case 216. Drain holes 232 are provided in the bottom portion 230 of the inner case 216, and drain holes 242 and 250 are provided in a bottom portion 240 of the grounding member 220. These drain holes 232, 242, 250 are positioned in such a manner as to be shifted from each other, to form a labyrinth structure. Grounding legs 244, each spreading sideward and projecting donward from the bottom portion 240, are formed at four corners of the grounding member 220. The grounding legs 244 lift upward the bottom portion 240 from a ground 246 by a height H for preventing the drain holes 242, 250 from being blocked by the ground 246, thus enabling water to be easily discharged. Also, since the grounding width of the grounding member 220 is larger than the width of the bottom portion 230 of the inner case 216, the battery charger is difficult to be fallen.

## Claims

1. A battery charger having a case and electric components (218, 343) packed in said case, said case comprising:
an inner case member (216, 320) for containing said electric components, said inner case member having an upper opening portion; an outer case member (214, 310) for covering at least said opening portion of said inner case member (216, 320); and
a grounding member (220, 330) for supporting the bottom portion of said inner case member (216, 320) and serving as a grounding portion of said case;
wherein said grounding member (220, 330) has a grounding width larger than the width of the bottom portion (230) of said inner case member (216, 320) and comprises grounding leg portions (244, 335) which are located at corners of the grounding member (220, 330) to separate the grounding member (220, 330) upward from a grounding surface (246) by means of said grounding leg portions (244, 335);
drain holes (232, 242, 250, 323, 334, 336) are provided in both said inner case member (216, 320) and said grounding member (220, 330); and
said drain holes (242, 250, 334, 336) provided in said grounding member (220, 330) are positioned higher than the grounding surface (246) of said grounding member (220, 330), wherein the corners of the grounding member (220, 330) are provided with corner-side drain holes (250, 336).

2. A battery charger according to claim 1, wherein a positioning recess fittable to the bottom portion of a battery is formed on the upper surface of said outer case member (214, 310) for placing said battery on said outer case member (214, 310) in such a manner as to be positioned by said positioning recess.

## Patentansprüche

1. Batterieladegerät mit einem Gehäuse und in dem Gehäuse untergebrachten elektrischen Komponenten (218, 343), wobei das Gehäuse umfaßt:
ein inneres Gehäuseelement (216, 320) zur Aufnahme der elektrischen Komponenten, wobei das innere Gehäuseelement einen oberen Öffnungsabschnitt aufweist;
ein äußeres Gehäuseelement (214, 310) zum Abdecken zumindest des Öffnungsabschnitts des inneren Gehäuseelements (216, 320);
ein Sockelelement (220,330) zum Tragen des Bodenabschnitts des inneren Gehäuseelements (216, 320) und das als Sockelabschnitt des Gehäuses dient;
wobei das Sockelelement (220, 330) eine Sockelbreite hat, die größer ist als die Breite des Bodenabschnitts (230) des inneren Gehäuseelements (216, 320), und Sockelbeinabschnitte (244, 335) aufweist, die an Ecken des Sockelelements (220, 330) angeordnet sind, um das Sockelelement (220, 330) mittels der Sockelbeinabschnitte (244, 335) von einer Standfläche (246) nach oben hin zu trennen;
wobei Ablauflöcher (232, 242, 250, 323, 334, 336) in sowohl dem inneren Gehäuseelement (216, 320) als auch dem Sockelelement (220, 330) vorgesehen sind;
wobei die in dem Sockelelement (220, 330) vorgesehenen Ablauflöcher (242, 250, 334, 336) höher angeordnet sind als die Standfläche (246) des Sockelelements (220, 330), wobei die Ecken des Sockelelements (220, 330) mit eckseitigen Ablauflöchern (250, 336) versehen sind.

2. Batterieladegerät nach Anspruch 1, wobei an der oberen Fläche des äußeren Gehäuseelements (214, 310) eine an den Bodenabschnitt einer Batterie passende Positionierungsvertiefung ausgebildet ist, um die Batterie an dem äußeren Gehäuseelement (214, 310) derart anzuordnen, daß sie von der Positionierungsvertiefung positioniert wird.

## Revendications

1. Chargeur de batterie comprenant un carter et des composants électriques (218, 343) montés à l'intérieur dudit carter, ledit carter comprenant :
un élément intérieur de carter (216, 320) destiné à contenir lesdits composants électriques, ledit élément intérieur de carter comportant une partie d'ouverture supérieure;
un élément extérieur de carter (214, 310) destiné à recouvrir au moins ladite partie d'ouverture dudit élément intérieur de carter (216, 320); et
un élément de mise à la masse (220, 330) destiné à supporter la partie d'embase dudit élément intérieur de carter (216, 320) et à servir de partie de mise à la masse dudit carter;
dans lequel :
ledit élément de mise à la masse (220, 330) a une largeur de mise à la masse supérieure à la largeur de la partie d'embase (230) dudit élément intérieur de carter (216, 320) et comprend des parties de patte de mise à la masse (244, 335) qui sont positionnées aux angles de l'élément de mise à la masse (220, 330) afin de séparer vers le haut l'élément de mise à la masse ((220, 330) d'une surface de mise à la masse (246) au moyen desdites parties de patte de mise à la masse (244, 335);
des orifices de drainage (232, 242, 250, 323, 334, 336) sont aménagés à la fois dans ledit élément intérieur de carter (216, 320) et dans ledit élément de mise à la masse (220, 330); et
lesdits orifices de drainage (242, 250, 334, 336) aménagés dans ledit élément de mise à la masse (220, 330) sont positionnés plus haut que la surface de mise à la masse (246) dudit élément de mise à la masse (220, 330), dans lequel les angles de l'élément de mise à la masse (220, 330) comportent des orifices de drainage d'angle (250, 336).

2. Chargeur de batterie selon la revendication 1, dans lequel un retrait de positionnement pouvant être ajusté sur la partie d'embase d'une batterie est formé sur la surface supérieure dudit élément extérieur de carter (214, 310) afin de positionner ladite batterie sur ledit élément extérieur de carter (214, 310) de manière à ce qu'elle soit positionnée au moyen dudit retrait de positionnement.
